Europäisches Patentamt

European Patent Office

Office européen des brevets

(11) Veröffentlichungsnummer: **0 254 879 B1**

(12) **EUROPÄISCHE PATENTSCHRIFT**

(45) Veröffentlichungstag der Patentschrift: **14.04.93**

(51) Int. Cl.5: **G01N 21/33**, G01N 21/35, G01N 21/31

(21) Anmeldenummer: **87109218.5**

(22) Anmeldetag: **26.06.87**

(54) **Multikomponenten-Prozessanalysensystem.**

(30) Priorität: **28.07.86 DE 3625490**

(43) Veröffentlichungstag der Anmeldung:
**03.02.88 Patentblatt 88/05**

(45) Bekanntmachung des Hinweises auf die
Patenterteilung:
**14.04.93 Patentblatt 93/15**

(84) Benannte Vertragsstaaten:
**AT FR GB IT SE**

(56) Entgegenhaltungen:
**EP-A- 0 145 877**
**DE-A- 2 344 398**
**US-A- 2 462 946**

**TECHNISCHES MESSEN T.M., 52. Jahrgang,
Heft 6, Juni 1985, Seiten 239-241, München,
Deutschland; W. SCHAEFER et al.:
"Spektroskopische Gas- und Flüssigkeits-
Prozessmesstechnik"**

**TECHNISCHES MESSEN T.M., 52. Jahrgang,
Heft 6, Juni 1985, Seiten 242-246, München,
Deutschland; G. SCHMIDTKE et al.:
"Spektroskopische Umweltmesstechnik"**

**PATENT ABSTRACTS OF JAPAN, Band 8, Nr.
211 (P-303)[1648], 26. September 1984; & JP -
A - 59 094 020 (TOSHIBA K.K.) 30.05.1984**

**PATENT ABSTRACTS OF JAPAN, Band 9, Nr.
243 (P-392)[1966], 30. September 1985; & JP -
A - 60 097 243 (HITACHI SEISAKUSHO K.K.)
31.05.1985**

**CBS COLLEGE PUBLISHING, 3. Auflage, 1985,
Seiten 68-73,127,128,142,143, USA; D.A. SKO-
OG: "Principles of instrumental analysis"**

(73) Patentinhaber: **KERNFORSCHUNGSZENTRUM
KARLSRUHE GMBH
Weberstrasse 5 Postfach 3640
W-7500 Karlsruhe 1(DE)**

(72) Erfinder: **Rinke, Günter, Dr.
Leopoldstrasse 67
W-7514 Eggenstein-Leopoldshafen(DE)**
Erfinder: **Krieg, Gunther, Prof. Dr.
Im Rennich 12
W-7500 Karlsruhe 41(DE)**

Beschreibung

Die Erfindung betrifft ein Multikomponenten-Prozeßspektrometer für Gase oder Flüssigkeiten, nach dem Oberbegriff des Patentanspruchs 1.

Die gleichzeitige Bestimmung mehrerer Komponenten in der Gas- bzw. Flüssigphase wird im allgemeinen mit folgenden Methoden erreicht:

a) Einsatz mehrerer Einzelphotometer

b) Spezialphotometer mit sehr vielen Interferenzfiltern

c) Gaschromatografen

d) Massenspektrometer

e) FT-IR-Systeme

f) Spektrometer mit Zeilendetektoren

Die Verwendung von mehreren Einzelphotometern ist wegen des erheblichen Aufwandes nur für eine geringe Anzahl von zu messenden Substanzen wirtschaftlich sinnvoll.

Bei der zweiten Alternative wird ein Filterrad verwendet, auf dem eine der Zahl der Komponenten entsprechende Anzahl von Interferenzfiltern untergebracht ist. Damit ist zwar eine prozeßtaugliche Messung möglich, aber erstens wird eine gewisse Zeit für die Umschaltung der Filter benötigt, die Konzentrationen müssen also während dieser Zeit konstant sein, und zweitens ist dieses System auch nicht preisgünstig zu erstellen.

Gaschromatografen, Massenspektrometer und FT-IR-Geräte bieten den Vorteil der gleichzeitigen Erfassung vieler Substanzen. Weiterhin braucht sich der Anwender nicht auf bestimmte zu analysierende Substanzen festzulegen, wie dies beim Spektralphotometer der Fall ist. Einfache Änderungen, meist rein softwarenmäßig, genügen. Allen diesen Systemen ist gemeinsam, daß sie nur als Laborgerät konzipiert sind. Dies gilt insbesondere für das FT-IR (Fouriertransformation im Infrarot), das auf dem Interferometerprinzip beruht und extrem vibrationsfrei aufgestellt werden muß. Außerdem kann dieses System nur noch mit zusätzlichem Aufwand für den sichtbaren Bereich erweitert werden. Gaschromatografen liefern nur alle 15 bis 30 min. Meßergebnisse, so daß eine Prozeßsteuerung nicht möglich ist. Massenspektrometer erfordern ein sauberes Hochvakuum und sind daher im Prozeßeinsatz problematisch.

Aus Technisches Messen T. M. 52. 1985 Juni, Heft 6, S. 242 bis 246 ist ein gattungsgemäßes Spektrometer bekannt.

Die der Erfindung zugrundeliegende Aufgabe besteht darin, das e. g. Multikomponenten-Prozeßspektrometer derart aufzubauen, daß das Emissions- oder Absorptionsspektrum eines Gemisches vieler Substanzen im Spektralbereich von UV bis IR gleichzeitig erfaßt werden kann und somit eine On-line-Bestimmung der Konzentration mehrerer Komponenten ermöglicht wird und daß eine Wellenlängeneichung in gewissen Zeitabständen automatisch durchgeführt werden kann.

Die Lösung ist im kennzeichenden Teil des Anspruches 1 beschrieben.

Die übrigen Ansprüche geben vorteilhafte Weiterbildungen der Erfindung wieder.

Grundlage des erfindungsgemäßen Multicomponenten-Prozeßspektrometers ist die quantitative Bestimmung der Strahlungsabsorption im Spektralbereich vom Ultravioletten bis in das Infrarote. Im Detektorkopf wird die Strahlung durch ein dispersives Element auf einen linearen Sensor abgebildet. Hierfür werden vorzugsweise pyroelektrische Arrays verwendet, die eine konstante Empfindlichkeit vom UV bis ins FIR aufweisen. Es können z. B. z. Z. bis zu 256 Einzeldetektoren auf einem Chip angeordnet werden, die mittels eines integrierten Schieberegisters ausgelesen werden.

Der modulare Aufbau erlaubt nicht nur eine Absorptionsmessung, sondern auch eine Messung der spektralen Emission, z. B. von Lampen, Fluoreszenz und Reflexion. Im sichtbaren Bereich können dazu z. B. Siliziumphotodioden-Arrays mit bis zu 4096 Elementen eingesetzt werden.

Das Prozeßmeßgerät eignet sich besonders für die Steuerung von chemischen Reaktoren, die Schadstoffemissionskontrolle und kann in der Lampen- und Farbindustrie eingesetzt werden.

Ein spezielles Ziel des Analysengerätes ist die kontinuierliche Messung der Konzentration von etwa 10 Komponenten. Vorgesehen ist zunächst ein Spektralbereich von 1 $\mu$m bis 10 $\mu$m. Das Umrüsten auf andere Substanzen kann durch reine Softwareänderungen erreicht werden, wenn nicht hochauflösende Spektren erwartet werden. In diesem Fall muß auch das dispergierende Element gewechselt werden.

Ein wesentlicher Vorteil der Erfindung ist der modulare Aufbau. Das System besteht aus Strahler, Absorptionszellen, Detektorkopf, Analog- und Digitalteil. Dadurch ist beispielsweise gewährleistet, daß der Detektorkopf über eine genormte Schnittstelle mit dem Personal-Computer eines Anwenders direkt verbunden werden kann.

Da die verwendeten pyroelektrischen Arrays auch noch im UV die gleiche Empfindlichkeit aufweisen, kann der Spektralbereich bis zu 200 nm herab erweitert werden. Dies ist jedoch nur dann sinnvoll, wenn das Meßgerät gleichzeitig im UV und IR betrieben werden soll und weiterhin keine hohe spektrale Auflösung gefordert wird.

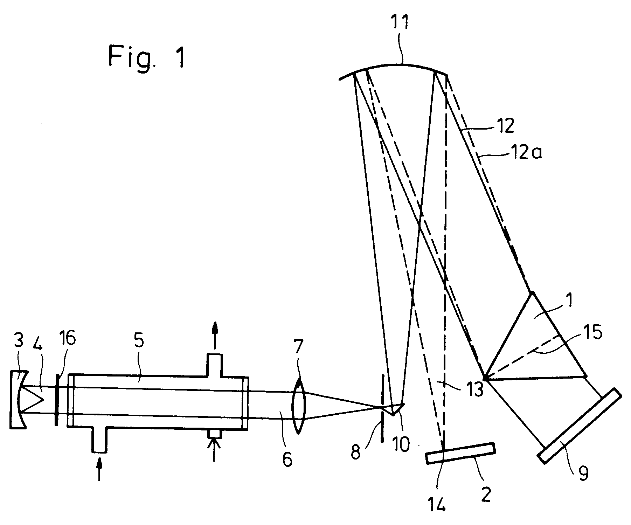

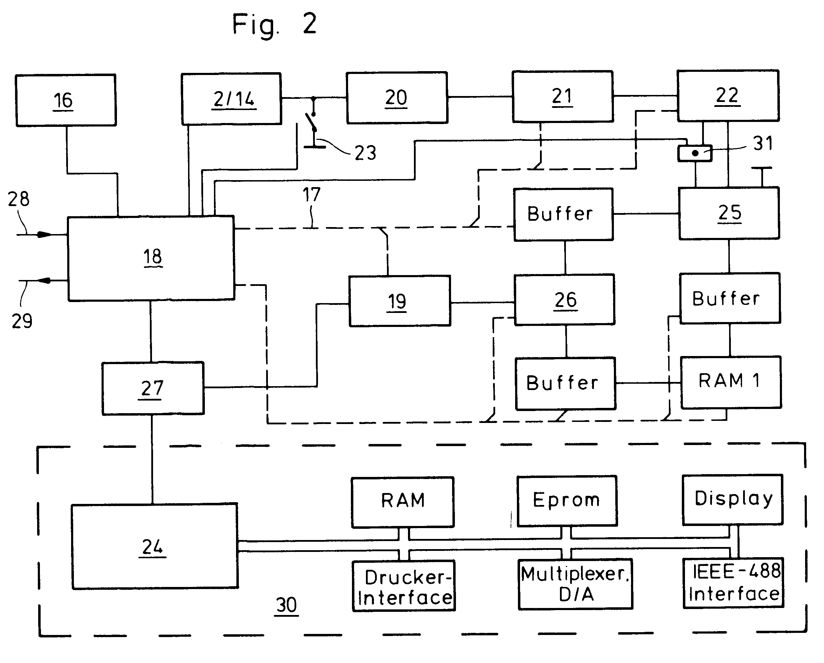

Die Erfindung wird im folgenden anhand von Ausführungsbeispielen mittels der Figuren 1 und 2 näher beschrieben.

Die optische Anordnung wird durch den gesamten zu erfassenden Spektralbereich, das Auflösungsvermögen und Abbildungsfehler bestimmt. Ein wichtiger Bestandteil wird von dem Prisma 1 als dispergierendem Element dargestellt.

Der Vorteil eines Prisma liegt vor allem an den nicht vorhandenen höheren Ordnungen, wie sie bei einem Beugungsgitter auftreten. Nachteilig ist die geringere und nichtlineare Dispersion.

Die für Linsen und Prisma einsetzbaren Materialien sollten eine gute Transmission über einen großen Spektralbereich aufweisen. Weiterhin ist besonders beim Prisma die Abhängigkeit des Brechungsindex n von Wellenlänge und Temperatur wichtig.

Der opto-mechanische Aufbau des Multikomponenten-Systems zeigt die Fig. 1. Die anregende Strahlenquelle 3 sendet einen Strahl 4 aus, der eine Prozeßküvette 5 durchquert. Die darin enthaltenen Komponenten adsorbieren entsprechend ihrer Auslegung UV- IR-Strahlung. Die durchgehende Strahlung 6 wird von einer Linse 7 auf einen Spalt 8 fokussiert. Hinter diesem Spalt 8 beginnt die eigentliche spektrale Verarbeitung mit einer abgewandelten Littrow-Anordnung des Prismas 1 mit Spiegel 9.

Die durch den Spalt 8 gelangende Strahlung 6 wird mittels eines Umlenkungsspiegels 10 auf einen Konkavspiegel 11 gerichtet, der die Strahlung dann als Parallelbündel 12 auf das Prisma 1 richtet. Dieses Prisma 1 zerlegt das Parallelbündel 12 spektral. Die spektral zerlegten Teilbündel werden mittels des Spiegels 9 auf den Konkavspiegel 11 zurückreflektiert und von dort aus als fokussierte Einzelbündel 13 auf das Array 2 mit seiner Vielzahl von Einzelsensoren 14 gerichtet. Die erfaßten Einzelbündel werden anschließend als Meßwerte elektronisch weiterverarbeitet.

Anstelle des Prismas 1 mit Spiegel 9 kann auch ein Prisma mit verspiegelter Rückseite 15 (gestrichelt in Fig. 1 eingezeichnet) oder ein Plangitter verwendet werden.

Bisher wurde der Spektrometerteil des optischen Aufbaus beschrieben. Wird das System als Prozeßabsorptionsphotometer betrieben, dann kommen zum Strahler 3 und Absorptionszelle 5 noch ein Chopper 16 und eventuell eine Eichlampe dazu. Der Chopper 16 ist deswegen erforderlich, weil die pyroelektrischen Sensoren 14 nur auf Temperaturänderungen reagieren. Sinnvoll ist es, ihn (16) in der Nähe des Strahlers 3 anzubringen und mit höherer Frequenz (ca. 100 Hz bis 200 Hz) zu betreiben. Eine hohe Temperatur der Küvette 5 bzw. langsame Änderungen wirken sich dann nicht nachteilig auf den Detektor 2/14 aus, da dieser zusammen mit der Signalerfassungselektronik nur Frequenzkomponenten in der Nähe der Chopperfrequenz wahrnimmt.

Zur Modulation der Strahlungsleistung kommen mehrere Verfahren in Betracht. Die direkte Wechselstromansteuerung des Strahlers 3 scheidet allerdings wegen der thermischen Trägheit der Glühwendel aus. Die Modulation mittels elektrooptischer Effekte wird wegen des eingeschränkten Transmissions-bereiches der entsprechenden Kristalle, des großen Aufwandes und der Kosten nicht in Betracht gezogen.

Es bleiben somit mechanische Lösungen sinnvoll. Eine elegante Methode ist z. B. ein sich unter 45° drehender Spiegel, der verschiedene Bohrungen enthält. Damit läßt sich sowohl eine Modulation der Strahlungsintensität erreichen als auch die Einblendung einer Eichlampe. Hierfür kommt z. B. eine Hg-Hochdrucklampe oder eine Metallhalogenidlampe in Betracht.Beide emittieren noch im infraroten Bereich Spektrallinien, die für eine Wellenlängeneichung des Spektrometers in gewissen Zeitabständen automatisch herangezogen werden können. Zusätzlich kann ein Fabry-Perot-Etalon eingeschwenkt werden, das z. B. alle 0,1 $\mu$m eine charakteristische Absorption hat. Eine einfachere Alternative ist noch die Kombination eines Gasfilters (z. B. $CO_2$) zusammen mit einem Fabry-Perot mit Luftspalt. Die Gasreferenz ermöglicht die Eindeutigkeit der vielen Interferenzordnungen, das Fabry-Perot liefert dann viele Eichmarken über den gesamten Spektralbereich. Mit $\lambda_0 = 2$ d/m und $\Delta\lambda = \lambda_0^2/2$ d ergibt sich z. B. für einen Spacer d = 50 $\mu$m ein Abstand der Absorptionsmaxima von $\Delta\lambda = 40$ nm bei $\lambda_0 = 2$ $\mu$m und $\Delta\lambda = 1$ $\mu$m bei $\lambda_0 = 10$ $\mu$m. Diese Lösung wäre vom Aufwand (Eichlampe + Netzteil) günstiger. Weiterhin weisen übliche Lampen einen Quarz- oder Glaskolben auf, der die Transmission im IR begrenzt. Außerdem kann für Substanzen mit Vibrationsstruktur ($CH_4$, $NH_3$ usw.) die Gaskorrelation angewendet werden.

Auch piezoelektrische Schwinger kommen für eine Strahlungsmodulation in Frage. Damit kann eine kompaktere Bauweise erreicht werden. Der Hub ist jedoch nur klein, so daß sie vor dem Eintrittsspalt 8, dem Array 2/14 oder in einem Brennpunkt innerhalb einer geeigneten Optik im Strahlengang 4 angeordnet werden können.

Als Detektoren 14 für den gesamten Spektralbereich von 200 nm bis 20 $\mu$m kommen pyroelektrische Empfänger in Betracht, die eine konstante Empfindlichkeit vom UV bis in das FIR aufweisen. Da das Multikomponentengerät auf dispersiver Basis arbeitet, müssen viele Einzeldetektoren 14 in der Fokallinie des Spektrometers angeordnet sein. Zur Zeit lassen sich bis zu 256 einzelne pyroelektrische Detektoren 14 auf einem Chip 2 integrieren. Als Sensoren 14 eignen sich auch PbS-, PbSe-, Ge- oder HgCdTe-Sensoren und Si-Photodioden.

Die pyroelektrischen Sensoren 14 arbeiten nach folgendem Prinzip: zunächst wird die auf den Detektor 2/14 fallende Strahlung 13 in einer dünnen Folie absorbiert und in Wärme umgewandelt. Die Absorption ist über den gesamten Spektralbereich von 200 nm bis 100 $\mu$m so groß, daß die auftreffende Strahlung nahezu vollständig absorbiert wird. Daraus resultiert die spektrale Empfindlichkeitscharakteristik. Die Temperaturerhöhung wird dann auf einen Kristall aus $LiTaO_3$ übertragen. Da dieses Material pyroelektrisch ist, werden Oberflächenladungen erzeugt, die mit einem hochohmigen Verstärker weiterverarbeitet werden. Ein solcher Kristall reagiert jedoch nur auf Temperaturänderungen, da sich die Oberflächenladungen nach einer gewissen Zeit ausgleichen. Aus diesem Grund muß ein kontinuierliches Lichtsignal immer amplitudenmoduliert werden. Vorteilhaft ist aber, daß keine exponentielle Temperaturabhängigkeit des Dunkelstromes und des damit verbundenen Rauschanteils besteht, wie dies z. B. bei Siliziumphotodioden der Fall ist. Die pyroelektrischen Sensoren 14 brauchen daher nicht gekühlt zu werden.

In den Arrays 2/14 werden die einzelnen Detektoranschlüsse nun nicht jeder extra nach außen geführt, sondern sie werden durch eine ebenfalls auf dem Chip integrierte Elektronik (Hybrid-Technik gem. Fig. 2) seriell ausgelesen. Dies wird folgendermaßen erreicht: ein dem Chip von außen zugeführtes Taktsignal 17 steuert mittels eines Controllers 18 ein auf dem Array 2 untergebrachtes Schieberegister. Dieses schaltet die einzelnen Detektorelemente 14 nacheinander über einen ebenfalls auf dem Array 2 integrierten FET-Multiplex-Schalter auf eine Leitung (Video), die dann nach außen geführt ist. Nach jedem Auslesen werden die Elemente wieder in einen definierten Zustand gebracht. Das Ausgangssignal wird nach Vorverstärkung 20, Sample & Hold 21 und A/D-Wandlung 22 digital weiterverarbeitet.

Der Dynamikbereich des pyroelektrischen Arrays 2/14 wird nach unten durch das Rauschen und nach oben durch Sättigungseffekte begrenzt, auf die im folgenden eingegangen wird.

Das Rauschen eines pyroelektrischen Arrays wird weder durch das thermische Rauschen des eigentlichen Sensorelementes 14 noch durch Schrotrauschen bestimmt, sondern hauptsächlich durch reset-noise und fixed-pattern-noise. Beide Komponenten gehen auf das serielle Auslesen der Elemente zurück.

Das reset-noise entsteht durch die thermische Rauschspannung des MOSFET-Schalters: nach Auslesen eines Elementes wird über den MOSFET die Video-Leitung auf Masse gelegt und die Kapazität $C_D$ jedes Detektors wieder auf 5 V aufgeladen.

Am Kanalwiderstand $R_K$ des Schalttransistors bleibt jedoch eine durch thermische Fluktuationen resultierende Spannung $U_R = (4 \, kT \, \Delta f R_K)^{1/2}$ bestehen. Die Bandbreite $\Delta f$ des Systems wird durch den Tiefpaß $R_K$, C bestimmt ($\Delta f = (3 \, R_K C)^{-1}$), wobei C die gesamte Videokapazität darstellt (ca. 20 pF). Dieser Rauschspannung $U_R = (4 \, kT/3 \, C)^{1/2}$ entspricht eine Ladungsfluktuation $Q_R = C \, U_R =$

$(4 \, kTC/3)^{1/2}$. Daraus errechnet sich eine äquivalente Rauschladung NEC $= Q_R = 3 \cdot 10^{-16}$ Cb, die auch experimentell beobachtet wird. Das entspricht einer Spannung $U_R = 15 \, \mu V$.

Das sogenannte fixed-pattern-noise geht auf kapazitive Einstreuungen des Taktsignals auf die Videoleitung zurück. Es setzt sich aus einem periodischen Anteil zusammen, der mit der Taktfrequenz korreliert ist und einem zufällig verteilten Anteil. Die experimentell bestimmte Ladungsfluktuation beträgt ca. $10^{-14}$ Cb. Das ist fast 1000 mal größer als das reset-noise. Allerdings kann der periodische Anteil vollständig durch ein geeignetes Schaltungs-Lay-out, kapazitive Kompensation durch das Taktsignal und Differenzbildung eliminiert werden. Der Rest ist nur durch Mittelung reduzierbar.

Bei großen Strahlungsintensitäten wird der Dynamikbereich dadurch begrenzt, daß die auf 5 V aufgeladenen Detektorelemente 2/14 vollständig entladen werden. Bei einer Kapazität eines Elementes von ca. 2 pF errechnet sich daraus eine Sättigungsladung von $Q_s = 8$ pCb. Dies hat z. B. für den nachfolgenden Verstärker 20 zur Folge, daß dieser nur sehr geringe Bias-Ströme aufweisen darf: ein Strom von 1 pA entlädt jedes Element in wenigen Sekunden.

Ist nur noch reset-noise als Rauschursache vorhanden, errechnet sich der Dynamikbereich zu $8 \cdot 10^{-12}$ Cb/$5 \cdot 10^{-16}$ = $10^{+4}$.

Ein für die Dimensionierung weiterer wichtiger Gesichtspunkt ist die optimale Chopperfrequenz. Diese sollte, was die Empfindlichkeit betrifft, möglichst niedrig sein. Andererseits wird dann das thermisch bedingte Kanalübersprechen sehr groß.

Als Kompromiß kann für Arrays 2/14 mit 100 $\mu m$ Abständen eine Chopperfrequenz von 200 $s^{-1}$, für solche mit 200 $\mu m$ eine von 100 $s^{-1}$ gewählt werden. In beiden Fällen muß mit einem Empfindlichkeitsverlust von 50 % bei einem Kanalübersprechen von 10 % gerechnet werden.

Die Rate, mit der das Array 2/14 ausgelesen wird, sollte wesentlich größer sein als die Chopperfrequenz, um eine für jedes Element etwa gleiche Integrationszeit zu erhalten. Beispielsweise erwärmt sich ein Detektorelement 14 bei mit 100 $s^{-1}$ Chopperfrequenz in 5 ms. Soll ein Array 2 mit 64 Elementen 14 in einem Zehntel dieser Zeit vollständig ausgelesen werden, muß das Taktsignal bereits eine Frequenz von 128 kHz haben. Da pro Element Daten ausgelesen, ein Reset 23 und eine Analog-Digital-Wandlung 22 durchgeführt werden muß, ist mindestens von Taktfrequenzen um 500 kHz auszugehen.

Die Elektronik gemäß Fig. 2 hat die Aufgabe das Array 2/14 auszulesen, die periodischen und statistischen Rauschanteile zu verringern, die Daten zu digitalisieren und daraus die Extinktionen oder Konzentrationen zu bestimmen.

Im Meßkopf selbst ist nur die unbedingt nötige Elektronik untergebracht, während die Auswertung, verschiedene Korrekturen und die Meßwertdarstellung in einem vom Meßort getrennten Rechner durchgeführt werden können. Diese flexible Lösung ermöglicht sowohl ein Einsatz eines 16-Bit-Prozeßrechners 30 als auch alternativ die Verwendung eines entsprechend leistungsstarken Personal-Computers.

Fig. 2 zeigt die gesamte Elektronik als Blockschaltbild. Das Videosignal des Arrays 2/14 gelangt nach Vorverstärkung 20 und der Sample und Hold Schaltung 21 auf den Analog-Digital-Wandler 22. Da das Ausgangssignal des Arrays 2/14 wegen der spektralen Emissionscharakteristik des IR-Strahlers und der spektralen Empfindlichkeit des Spektrometes nicht konstant sein kann, sollte unbedingt ein 16-bit-A/D-Wandler verwendet werden. Eine Variation der Strahlungsintensität entlang des Arrays 2/14 um einen Faktor 10 z. B. bewirkt dann keine schlechtere Nachweisgrenze als $10^{-4}$ in Extinktion.

Da die Signale des pyroelektrischen Detektors verrauscht sind, muß eine geeignete Mittelwertbildung durchgeführt werden. Außerdem ist noch eine Reduktion des fixed-pattern-noise durch Subtraktion erforderlich. Dies kann bei einem thermischen Sensor, wie es das pyroelektrische Array 2/14 ist, einfach erzielt werden: jedes ausgelesene Videosignal hat die entgegengesetzte Polarität gegenüber dem zuvor ausgelesenem. Das geht auf die ständige Erwärmung und Abkühlung beim Chopperbetrieb zurück. Im Gegensatz dazu verändert das durch elektrische Einstreuung verursachte fixed-pattern-noise seine Polarität nicht. Es wird daher durch eine Subtraktion reduziert, während das Meßsignal addiert wird.

Die eigentliche Subtraktion kann ganz einfach erreicht werden: der A/D-Wandler 22 liefert bei negativem maximalen Input am Ausgang 00...00, bei positivem 11...11 und bei OV 10...00. Eine Signalinvertierung wird also durch Negation (Invertierung 31) des Bit 16 (MSB) erreicht.

In den folgenden Stufen wird das Meßsignal mit einem 32 x 32 Bit Addierer 25 (Ripple-Carry-Prinzip) im RAM 2 (26) aufsummiert. Das Schieberregister 19 wählt von den 32 Datenleitungen 16 aus, die den Mittelwert repräsentieren: werden $2^N$ Summationen ausgeführt, dann werden die untersten N Bits ignoriert. Die nächsten 16 bits stellen dann den Mittelwert über $2^N$ Summation dar.

Die Ablaufsteuerung (Controller 18) startet das Aulesen des Arrays 2/14, erzeugt den Takt für das auf dem Array untergebrachte Schieberegister, synchronisiert den Chopper 16, steuert Reset 23 und fixed-pattern Subtraktion und führt die Mittelung über viele Scans durch.

Die gesamte Zeit $t_a$ zum Auslesen des Arrays 2/14 sollte klein gegen die Dauer $t_{ch}$ der Erwärmung oder Abkühlung sein, die durch die Chopperfrequenz $f_{ch}$ bestimmt ist: $t_{ch} = 2 f_{ch})^{-1}$. Anderenfalls ist die Inegrationszeit für jedes Element sehr unterschiedlich. Wird z. B. $f_{ch} = 100$ Hz gewählt, dann sollte $t_a$ 5 ms sein. Bei 64 Elementen bedeutet das eine Ausleserate von größer als 13 kHz, d. h. der nachfolgende A/D-Wandler 22 sollte eine Konversionszeit von kleiner als 78 $\mu$s aufweisen. Mittlerweile gibt es preisgünstige 16-Bit A/D-Wandler nach dem Prinzip der sukzessiven Approximation mit 15 $\mu$s Wandlungszeit.

Nach $n = 2^N$ Summationen ($n_{max} = 2^{32}/2^{16} = 2^{16} = 65535$) wird das gemittelte Spektrum über ein serielles Interface 27 zum 16-Bit-Prozessor 24 übertragen. Dies kann nach der Norm RS 232C (20 mA) durchgeführt werden. Es ist aber auch die Datenübertragung mittels Lichtleiter vorgesehen, um eine hohe Störunempfindlichkeit zu erreichen.

Der untere Teil der Fig. 2 zeigt den groben Aufbau des Rechners 30. Dafür kann ein IBM-PC-kompatibler Typ eingesetzt werden. Der Rechner übermittelt dem Meßkopf zunächst die Zahl der Summationen, fragt einen vorhandenen Drucksensor 28 ab und führt Geräteselbsttests durch, wie z. B. Wellenlängeneichung und spektrale Empfindlichkeitskorrektur. Für kritische Anwendungen ist eine Wellenlängenfeinjustierung über Piezokristalle 29 möglich.

Die Hauptaufgabe des Rechners 30 ist jedoch die schnelle Meßwertverarbeitung. Für jede gewünschte Komponente soll die Extinktion und Konzentration unter Berücksichtigung von Querempfindlichkeiten bestimmt und in geeigneter Weise dargestellt und ausgegeben werden.

Enthält der PC eine Grafik-Karte, dann kann das Gerät auch ein Übersichtsspektrum geben.

Die Berechnung der Konzentrationen von m Komponenten läuft auf die Lösung von Matrizen von m Gleichungen mit m Unbekannten hinaus. Um jedoch auch Querempfindlichkeiten berücksichtigen zu können, soll noch bei anderen Wellenlängen gemessen werden. Dies führt nur zu einer scheinbaren Unbestimmheit des Gleichungssystems, da die Extinktionskoeffizienten einer Komponente in einem festen Verhältnis zueinander stehen.

Abschließend sei erwähnt, daß auch eine variable Array-Taktrate denkbar ist. Damit kann eine gewisse Empfindlichkeitskorrektur schon am Detektor 2/14 erreicht werden, die gesamte Auslesezeit kann geringer sein und die Anforderungen an die Genauigkeit des Sample-Hold 21 und des A/D-Wandlers 22 werden verringert.

Das gesamte Meßsystem besteht aus vier einzelnen Baugruppen: Strahlungsquelle 3 mit Modulator 16, Absorptionszelle 5, Detektorkopf 8 - 15 und Rechner 30.

Die Strahlungsquelle 3 wird zwischen einem Konkavspiegel und einer Kondensorlinse so angeordnet, daß zwischen Lampe und Linse ein reelles Zwischenbild entsteht. An diese Position wird dann auch der Chopper 16 mit kleiner Apertur eingebaut wird. Da die Stabilität im UV durch die Strahlungsquelle bestimmt wird, kann dieser Chopper gleichzeitig dazu benutzt werden, einen Teil des Lichtes über einen (nicht dargestellten) Lichtleiter auf den Detektorkopf direkt zu geben, um Intensitätsschwankungen zu erfassen und berücksichtigen zu können.

Der Meßkopf enthält die optischen Komponenten und die zur Auslegung des Arrays 2/14 unbedingt notwendigen Elektronik (Fig. 2). Die Elektronik ist unterhalb des optischen Teils angeordnet. Der gesamte Meßkopf ist thermostatisiert. Für den Industrieeinsatz ist die SMD-Technik (Surface Mounted Devices) vorgesehen.

Optional kann vor dem Eintrittsspalt 8 ein Fabry-Perot und/oder ein Gasfilter (nicht dargestellt) angebracht werden, mit denen eine ständige Kontrolle der Wellenlängeneichung möglich ist. Gleichzeitig können in kritischen Fällen Gaszellen für die Gaskorrelation dort angebracht werden.

## Patentansprüche

1. Multikomponenten-Prozeßspektrometer für Gase oder Flüssigkeiten mit einer quantitativen Bestimmung der von den Gasen oder Flüssigkeiten absorbierten Strahlung im UV- bis IR-Spektralbereich, welches aus Strahlungsquelle, Kollimator, dispergierendem Element (1), Fokussierungseinrichtungen (7,11) und einem Detektroarray (2) besteht, wobei die Gase oder Flüssigkeiten mit absorptionsfähiger Strahlung bestrahlt und die durch die Gase oder Flüssigkeiten transmittierende Strahlung mittels dem dispergierendem Element in seine Spektralkomponenten zerlegt wird, und daß das Detektorarray diese Spektralkomponenten gleichzeitig mißt, **dadurch gekennzeichnet, daß**

   a) die Strahlungsquelle (3) so zwischen einem Konkavspiegel und einer Kondensorlinse angeordnet ist, daß zwischen Strahlungsquelle (3) und Kondensorlinse ein reelles Zwischenbild der Strahlungsquelle (3) entsteht,
   b) am Ort dieses Zwischenbildes ein Chopper (16) als Modulator zur Modulation der Strahlung schräg angeordnet ist, wobei die Chopperachse im Winkel von 45° zum Strahlengang steht,
   c) der Chopper (16) verspiegelt ist, so daß darüber das Emissionsspektrum einer Eichlampe in den Strahlengang eingekoppelt werden kann.

2. Multikomponenten-Prozeßspektrometer nach Anspruch 1, **dadurch gekennzeichnet, daß** in den optischen Strahlengang ein Fabry-Pérot-Etalon zusammen mit einem Gasfilter einschwenkbar ist.

3. Multikomponenten-Prozeßspektrometer nach Anspruch 1 oder 2, **dadurch gekennzeichnet, daß** das Detektorarray (2, 14) aus pyroelektrischen Sensoren besteht.

## Claims

1. Multiple component process spectrometer for gases or liquids having a quantitative means for determining the radiation, absorbed by the gases or liquids, in the UV to IR spectral range, which spectrometer includes a source of radiation, a collimator, a dispersing element (1), focusing arrangements (7, 11) and a detector array (2), the gases or liquids being irradiated with absorbable radiation, and the radiation, which is transmitted through the gases or liquids, being split into its spectral components by means of the dispersing element, and wherein the detector array simultaneously measures these spectral components, characterised in that

   a) the source of radiation (3) is so disposed between a concave mirror and a condenser lens that a real intermediate image of the source of radiation (3) is produced between the source of radiation (3) and the condenser lens;
   b) a chopper (16), serving as a modulator for modulating the radiation, is inclinedly disposed at the location of this intermediate image, the chopper axis extending at an angle of 45° relative to the path of rays;
   c) the chopper (16) is mirror-coated, so that the emission spectrum of a calibration lamp may be connected into the path of rays thereabove.

2. Multiple component process spectrometer according to claim 1, characterised in that a Fabry-Pérot standard is pivotable into the optical path of rays together with a gas filter.

3. Multiple component process spectrometer according to claim 1 or 2, characterised in that the detector array (2, 14) includes pyroelectrical sensors.

**Revendications**

1.  Spectromètre de procédé à plusieurs composants pour des gaz ou des liquides avec une détermination quantitative du rayonnement absorbé par les gaz ou les liquides dans le domaine spectral de l'ultraviolet à l'infrarouge, appareillage comportant une source de rayonnement, un collimateur, un élément dispersant (1), un dispositif de focalisation (7, 11) et un réseau de détection (2), appareil dans lequel les gaz ou les liquides sont irradiés par un rayonnement à pouvoir absorbant et le rayonnement se transmettant à travers les gaz ou liquides au moyen de l'élément dispersif est décomposé en ses composants spectraux et le réseau de détection mesure en même temps ces composants spectraux, spectromètre caractérisé en ce que :

    a) la source de rayonnement (3) est placée entre un miroir concave et une lentille de condenseurs, de sorte qu'entre la source de rayonnement (3) et la lentille de condenseur prend naissance une réelle image intermédiaire de la source de rayonnement (3),

    b) au lieu de cette image intermédiaire est placé incliné un hacheur (16) comme modulateur pour la modulation du rayonnement, l'axe du hacheur faisant un angle de 45° avec le trajet du rayonnement,

    c) le hacheur (16) est métallisé, de sorte qu'en plus peut être inséré le spectre d'émission d'une lampe étalon dans la marche des rayons.

2.  Spectromètre de procédé à multi composants, selon la revendication 1, caractérisé en ce que dans la marche optique des rayons on peut insérer un étalon Fabry-Perot en commun avec un filtre à gaz.

3.  Spectromètre de procédé à multi composants, selon la revendication 1 ou 2, caractérisé en ce que la matière de détection (2, 14) est composée de capteurs pyroélectriques.

Fig. 1

# Fig. 2